# FASCICULE DE BREVET EUROPEEN

(11) **EP 2 991 279 B1**
(45) Date de publication et mention de la délivrance du brevet: **02.05.2018**
(21) Numéro de dépôt: 15306312.8
(22) Date de dépôt: 25.08.2015
(51) Int. Cl.: H04L 12/28, H04L 12/24, H04W 4/00, H04M 1/725, H04L 29/08

(54) **PROCÉDÉ DE TRANSFERT D'INFORMATION BIDIRECTIONNEL À PARTIR D'UN SYSTÈME DOMOTIQUE, UN TEL SYSTÈME ET UN ENSEMBLE CONVENANT À LA MISE EN UVRE DU PROCÉDÉ**
VERFAHREN ZUM BIDIREKTIONALEN INFORMATIONSTRANSFER VON EINEM HEIMSYSTEM AUS, EIN SOLCHES SYSTEM UND EINE PASSENDE ANORDNUNG ZUR UMSETZUNG EINES SOLCHEN VERFAHRENS
METHOD FOR BI-DIRECTIONAL TRANSFER OF INFORMATION FROM A HOME AUTOMATION SYSTEM, SUCH A SYSTEM AND A UNIT FOR CARRYING OUT SAID METHOD

(30) Priorité: 27.08.2014 FR 1458021
(43) Date de publication de la demande: 02.03.2016
(73) Titulaire: HAGER CONTROLS (Société par Actions Simplifiée), 67700 Saverne (FR)
(72) Inventeur: COURREGES, Stanis, 67330 KIRRWILLER (FR); FRICKER, Philippe, 67330 BOUXWILLER (FR); PAILLARD, Jean-Noël, 67190 DINSHEIM-SUR-BRUCHE (FR)
(74) Mandataire: Nuss, Laurent

(56) Documents cités:
- EP-A1- 2 704 365
- US-A1- 2006 258 289
- US-A1- 2010 283 613

## Description

La présente invention concerne le domaine des équipements pour installation domotique et a pour objet un dispositif de configuration ou d'appairage de produits.

Dans le monde de la gestion intelligente de l'habitat et du bâtiment, c'est-à-dire de la domotique, le système constitué par un ensemble de produits d'entrée tels que, par exemple, des interrupteurs ou des interfaces de commande et de sortie tels que des actionneurs d'éclairage, de volets roulants ou autres ouvrants, de chauffage, de climatisation, d'accès, doit être configuré par un installateur professionnel ou par l'utilisateur final dans le cas d'installations de faibles dimensions ou simples à effectuer. En effet, l'installateur doit associer les produits d'entrées et de sortie avec la fonction désirée à savoir la configuration ou l'appairage des produits.

La configuration des produits s'effectue directement par lien sans fil, par ondes hertziennes, avec le média radio utilisé pour l'actionnement des produits par exemple, pour l'Europe, à 868 MHz, 433 MHz selon des standards ou des protocoles de communication tels que KNX, Zigbee, IO-Home Control ou par un lien entre une technologie filaire et sans fil, par exemple à partir d'une IHM.

La publication de brevet EP2704365 décrit un système de domotique comprenant un contrôleur portable et plusieurs dispositifs de domotique, dans lequel le contrôleur permet le partage d'information entre appareils du système par une interface de type NFC ou RFID Cette manière d'effectuer la configuration des produits connus de l'art antérieur nécessite que les produits soient alimentés en électricité au moment où la configuration est effectuée. Les produits n'étant pas alimentés en électricité, une configuration des produits n'est pas possible. De plus, dans le cas d'une pluralité de produits présent dans le réseau, il n'est pas possible pour l'installateur effectuant la configuration de repérer à partir de l'emplacement du produit dans l'habitat ou le bâtiment, le produit dans le réseau en vue de réaliser sa configuration, son paramétrage et/ou son appairage avec un ou plusieurs autres produits La présente invention a pour but de pallier ces inconvénients.

A cet effet, l'invention a pour objet un procédé de transfert d'information bidirectionnel pour réaliser une configuration et/ou un paramétrage et/ou un appairage d'un système domotique à partir d'un dispositif mobile, ledit système domotique comprenant au moins un produit, ledit dispositif mobile comprenant un microcontrôleur et une mémoire ; ledit dispositif mobile étant apte à effectuer une configuration et/ou un paramétrage du produit ou d'au moins l'un des produits et étant apte à appairer au moins un produit avec au moins un autre produit et comprenant un lecteur de puce à champ de communication proche tel qu'un lecteur de puce NFC et une mémoire, ledit produit comprenant une puce à champ de communication proche telle qu'une puce NFC et une mémoire contenant au moins une information,
procédé caractérisé en ce qu'il comprend, pour le ou chaque produit concerné, à configurer et/ou paramétrer et/ou appairer, et à partir d'un tel lecteur capable de communiquer de façon bidirectionnelle avec la ou chaque puce, les étapes successives suivantes :
a) approcher le dispositif mobile de la puce ou d'au moins deux puces, et
b) pour la ou chaque puce approchée établir un lien de communication bidirectionnelle à champ de communication proche entre le lecteur et la puce correspondante pour pouvoir, au choix, réaliser les étapes suivantes :
   i) soit transmettre une nouvelle information, créée à l'aide du microcontrôleur, depuis le dispositif mobile vers la puce,
   ii) soit transmettre une information, stockée dans la mémoire du produit, depuis la puce de ce dernier vers le lecteur, puis transmettre depuis le lecteur vers la puce, à travers le lien de communication bidirectionnelle à champ de communication proche, une nouvelle information, créée à partir du dispositif mobile en fonction ou sur la base de la ou d'au moins l'une des information(s) transmise(s) par le ou les produits, puis à stocker la nouvelle information dans la mémoire du produit concerné.

La puce à champ de communication proche peut être, selon une caractéristique préférentielle, une puce NFC ou une puce RFID.

Selon une caractéristique préférentielle, le lecteur de puce à champ de communication proche peut être un lecteur de puce NFC ou un lecteur de puce RFID.

Selon une possibilité, le dispositif mobile peut être un téléphone mobile du type Smartphone ou une tablette informatique. Selon une autre possibilité, le dispositif mobile peut être un dispositif mobile dédié à la configuration et/ou au paramétrage et/ou à l'appairage d'un système domotique.

Selon une caractéristique additionnelle possible, le dispositif mobile peut comprendre un moyen d'affichage et/ou un moyen d'entrée.

Le procédé selon l'invention présente l'avantage, qu'une configuration et/ou au paramétrage et/ou un appairage d'un système domotique peut être effectué, par exemple dans une étape préalable à l'installation du système domotique dans son lieu prévu, avant que les produits du système domotique soient approvisionnés en électricité.

Selon une possibilité, dans l'étape b)i), la nouvelle information, créée à l'aide du microcontrôleur, peut être créée à l'aide de données téléchargées d'une base de données à travers internet ou fournies avec le produit sur un support informatique.

Selon une caractéristique additionnelle possible, le procédé peut comprendre, à partir du système domotique comprenant au moins deux produits, à savoir un premier produit et un deuxième produit et à partir du dispositif mobile apte à effectuer un appairage du premier produit avec le deuxième produit :
- dans l'étape a) approcher le dispositif mobile de la puce du premier produit et approcher le dispositif mobile de la puce du deuxième produit,
- dans l'étape b) lorsque le dispositif mobile est approché du premier produit,
   établir un premier lien de communication bidirectionnelle à champ de communication proche entre le lecteur et la puce du premier produit, et lorsque le dispositif mobile est approché du deuxième produit,
   établir un deuxième lien de communication bidirectionnelle à champ de communication proche entre le lecteur et la puce du deuxième produit,
- dans l'étape b)ii)
   transmettre depuis la puce du premier produit jusque dans le lecteur l'information, dite première information, associée au premier produit, à travers le premier lien de communication bidirectionnelle à champ de communication proche et à transmettre depuis la puce du deuxième produit jusque dans le lecteur l'information, dite deuxième information, associée au deuxième produit à travers le deuxième lien de communication bidirectionnelle à champ de communication proche,
transmettre, à partir du dispositif mobile, à la puce du premier produit une nouvelle information, dite première nouvelle information, à travers le premier lien de communication bidirectionnelle et transmettre, à partir du dispositif mobile, à la puce du deuxième produit une nouvelle information, dite deuxième nouvelle information, à travers le deuxième lien de communication bidirectionnelle, ladite première nouvelle information étant créée en fonction ou sur la base de la première et/ou de la deuxième information(s), ladite deuxième nouvelle information étant créée en fonction ou sur la base de la deuxième et/ou de la première information(s),
stocker dans la mémoire du premier produit la première nouvelle information et/ou stocker dans la mémoire du deuxième produit la deuxième nouvelle information.

Selon une caractéristique additionnelle possible, un produit peut être appairé à plusieurs produits.

Selon une possibilité, le premier produit et/ou le deuxième produit peuvent être des produits d'entrée et/ou des produits de sortie. Le produit d'entrée peut être par exemple un interrupteur, une interface de commande, un capteur de mouvement. Le produit de sortie peut être par exemple un actionneur d'éclairage, un actionneur de volet roulant, une commande de chauffage, une commande de climatisation ou un dispositif de contrôle d'accès.

Selon une caractéristique additionnelle possible, le produit d'entrée peut être appairé à plusieurs produits de sortie et/ou plusieurs produits d'entrée peuvent être appairés au produit de sortie et/ou plusieurs produits d'entrée peuvent être appairés à plusieurs produits de sortie. Par exemple un seul interrupteur peut être appairé à plusieurs actionneurs d'éclairage, plusieurs interrupteurs peuvent être appairés à un seul actionneur d'éclairage et/ou plusieurs interrupteurs peuvent être appairés à plusieurs actionneurs d'éclairage.

Selon une possibilité, le premier et/ou le deuxième produit peut être simultanément un produit d'entrée et un produit de sortie. Une minuterie peut par exemple être un produit d'entrée et un produit de sortie. Une minuterie peut recevoir des commandes, par exemple d'une interface de commande pour déclencher la minuterie et peut envoyer une commande, par exemple à un actionneur d'éclairage.

Selon une caractéristique additionnelle possible, le produit ou l'au moins un des produits peut être relié à un réseau domotique à travers un lien domotique.

De façon préférentielle, le lien domotique peut être effectué selon les standards ou les protocoles de communication tels que KNX, Zigbee, IO-Home Control ou par un lien entre une technologie filaire et sans fil, par exemple à partir d'une IHM.

Selon une possibilité, le réseau domotique peut permettre la communication entre les produits reliés au réseau à travers un lien domotique.

Selon une possibilité, le produit de sortie peut être apte à envoyer une commande à un produit d'entrée à travers le réseau domotique.

Selon une caractéristique additionnelle possible, le produit d'entrée peut être apte à recevoir une commande émise par un produit de sortie à travers le réseau domotique.

Selon une caractéristique additionnelle possible, le procédé de transfert d'informations bidirectionnel peut avoir pour but de réaliser appairage entre le premier produit et le deuxième produit, pour permettre au premier produit d'envoyer une commande, par exemple à travers du réseau domotique, au deuxième produit et/ou pour permettre au deuxième produit d'envoyer une commande, par exemple à travers du réseau domotique au premier produit.

Selon une possibilité, dans l'étape b)ii) la ou chaque nouvelle information peut être créée sur la base de la ou d'au moins l'une des informations transmises en modifiant la ou les informations transmises à l'aide du dispositif mobile.

Selon une possibilité, dans l'étape b)ii) la ou chaque nouvelle information peut être créée sur la base de la ou d'au moins l'une des informations transmises en modifiant la ou les informations transmises à l'aide du moyen d'entrée du dispositif mobile par un utilisateur.

Selon une caractéristique additionnelle possible, dans l'étape b)ii) la ou chaque nouvelle information peut être créée en affichant la ou les informations transmises à l'aide du moyen d'affichage affichant la ou les informations transmises à l'utilisateur et en modifiant la ou les informations transmises à l'aide du moyen d'entrée pour pouvoir créer la ou les nouvelles informations.

Selon une possibilité, l'information du produit concerné peut comprendre au moins un identifiant du produit concerné permettant l'identification du produit concerné.

Selon une possibilité, dans l'étape b)ii), pour le premier produit la première nouvelle information peut comprendre l'identifiant du deuxième produit pour réaliser l'appairage du premier produit avec le deuxième produit, et/ou pour le deuxième produit la deuxième nouvelle information peut comprendre l'identifiant du premier produit pour réaliser l'appairage du deuxième produit avec le premier produit.

Ainsi, le premier produit peut identifier le deuxième produit dans le réseau domotique pour envoyer une commande du premier produit au deuxième produit et/ou pour recevoir des commandes émises par le deuxième produit à travers le réseau domotique, et le deuxième produit peut identifier le premier produit dans le réseau domotique pour envoyer une commande depuis le deuxième produit au premier produit à travers du réseau domotique et/ou pour recevoir une commande émise le premier produit à travers le réseau domotique. L'identifiant peut permettre l'identification du produit concerné dans le réseau domotique.

Selon une possibilité, le premier produit peut être appairé au deuxième produit et/ou le deuxième produit peut être appairé au premier produit.

Selon une caractéristique additionnelle possible, le premier produit peut être un produit d'entrée et le deuxième produit peut être un produit de sortie.

Selon une autre caractéristique additionnelle possible, le premier produit peut être un produit de sortie et le deuxième produit est un produit d'entrée.

Ainsi, la première nouvelle information comprenant l'identifiant du deuxième produit peut permettre au premier produit soit d'envoyer une commande à travers le réseau domotique au deuxième produit soit d'écouter les commandes émises par le deuxième produit.

La deuxième nouvelle information comprenant l'identifiant du premier produit peut permettre au deuxième produit soit d'envoyer une commande à travers le réseau domotique au premier produit soit d'écouter, à travers le réseau domotique, les commandes émises par le premier produit.

Selon une caractéristique additionnelle possible, l'information transmise depuis le produit concerné comprend au moins un paramètre de réglage pouvant régler le fonctionnement du produit concerné et en ce que la nouvelle information peut comprendre un nouveau paramètre de réglage pouvant régler le fonctionnement du produit concerné, ledit nouveau paramètre de réglage pouvant être modifié à la demande d'un utilisateur se servant du dispositif mobile.

Selon une possibilité, le paramètre de réglage peut régler le fonctionnement du produit concerné, par exemple la durée d'un intervalle de temps d'une minuterie pendant lequel la minuterie peut envoyer une commande à un produit de sortie, un paramètre réglant la sensibilité d'un capteur de mouvement, un paramètre de réglage réglant le fonctionnement d'un thermostat.

Selon une possibilité, la puce à champ de communication proche du ou des produits peut être une puce NFC ou RFID passive ou semi-passive.

De façon préférentielle, le procédé peut consister dans l'étape a) à approcher le dispositif mobile de la puce correspondante et à mettre en tension la puce du produit concerné à l'aide du lecteur de puce.

Selon une possibilité, le procédé peut comprendre, à partir du dispositif mobile comprenant au moins un microcontrôleur, ledit dispositif mobile pouvant être de préférence un téléphone mobile du type Smartphone ou une tablette informatique, les étapes suivantes :
- lancer un logiciel sur le microcontrôleur ;
- piloter à l'aide du logiciel le lecteur de puce pour établir le ou au moins l'un des lien(s) de communication bidirectionnelle,
- piloter à l'aide du logiciel le lecteur de puce pour retirer de la mémoire du produit concerné l'information associée au produit concerné à travers le ou au moins l'un des lien(s) de communication bidirectionnelle,
- commander, à l'aide du logiciel, le microcontrôleur pour charger l'information associée au produit concerné dans la mémoire du dispositif mobile,
- commander le microcontrôleur pour modifier la ou les information(s) transmises dans le lecteur à l'aide du logiciel et pour stocker la ou les information(s) modifiée(s) du produit concerné en tant que nouvelle(s) information(s) à associer au produit(s) concerné(s) dans la mémoire du dispositif mobile,
- piloter le lecteur pour envoyer à la puce du produit concerné la nouvelle information du produit concerné à travers le lien de communication bidirectionnelle, et
- piloter le lecteur pour stocker dans la mémoire du produit concerné la nouvelle information du produit concerné.

Selon une caractéristique additionnelle possible, le logiciel est lancé sur le microcontrôleur à l'aide d'une commande effectuée par l'utilisateur sur le moyen d'entrée du dispositif mobile.

Selon une possibilité, commander le microcontrôleur pour modifier la ou les informations transmises dans le lecteur à l'aide du logiciel peut être effectué par l'utilisateur à l'aide du moyen d'entrée.

Selon l'invention, il est également proposé de prévoir un système domotique convenant à la mise en oeuvre du procédé selon l'invention en coopération avec un dispositif mobile tel que défini dans son fonctionnement selon le procédé de l'invention, ledit système comprenant au moins un produit,
le ou au moins l'un des produits comprenant une puce à champ de communication proche et une mémoire contenant au moins une information, caractérisé en ce que
ladite puce et le lecteur du dispositif mobile étant aptes à établir entre eux un lien de communication bidirectionnelle à champ de communication proche.

Selon une possibilité, le système domotique peut comprendre au moins deux produits, à savoir un premier produit et un deuxième produit,
le premier produit comprenant une première puce à champ de communication proche et une mémoire, ladite première puce étant apte à établir avec le lecteur un premier lien de communication bidirectionnelle.
le deuxième produit comprenant une deuxième puce à champ de communication proche et une mémoire, ladite deuxième puce étant apte à établir avec le lecteur un deuxième lien de communication bidirectionnelle.
le premier produit et le deuxième produit étant de préférence appairés à l'aide d'une mise en oeuvre du procédé selon l'invention.

Selon une caractéristique additionnelle possible, le premier produit peut être un produit d'entrée et le deuxième produit peut être un produit de sortie.

Selon une possibilité, la ou chaque puce à champ de communication proche peut être une puce passive ou semi-active, qui peut être apte à communiquer avec le lecteur sans être alimentée électriquement de l'extérieur.

Selon l'invention, il est également proposé de prévoir un assemblage domotique pouvant comprendre un système domotique selon l'invention et un dispositif mobile, ledit dispositif mobile pouvant être apte à effectuer une configuration et/ou un paramétrage du produit ou d'au moins l'un des produits et pouvant être apte à appairer au moins un produit avec au moins un autre produit et pouvant comprendre un lecteur de puce à champ de communication proche tel qu'un lecteur de puce NFC, un microcontrôleur et une mémoire, caractérisé en ce que,
la puce du ou de chaque produit et ledit lecteur sont aptes à établir entre le lecteur et la ou chaque puce un lien de communication bidirectionnelle à champ de communication proche,
ledit dispositif mobile est apte à retirer de la mémoire du produit concerné l'information contenue dans sa mémoire à travers le lien de communication bidirectionnelle correspondant,
ledit dispositif mobile est apte à charger dans sa mémoire l'information retirée associée au produit concerné,
ledit dispositif mobile est apte à créer la nouvelle information telle que définie dans l'étape b)i) et/ou l'étape b)ii) et à stocker la nouvelle information dans la mémoire du dispositif mobile,
ledit dispositif mobile est apte à transmettre à la puce à champ de communication proche du produit concerné la nouvelle information associée au produit concerné à travers le lien de communication bidirectionnelle à champ de communication proche correspondant, et
ledit dispositif mobile est apte à stocker dans la mémoire du produit concerné la nouvelle information associée au produit concerné.

L'invention sera mieux comprise, grâce à la description ci-après, qui se rapporte à deux modes de réalisation préférés, donnés à titre d'exemple non limitatif, et expliqués avec référence aux dessins schématiques annexés, dans lesquels :
- la figure 1 montre un système domotique, selon un premier mode de réalisation, comprenant deux produits ainsi qu'un dispositif mobile selon la présente invention ;
- la figure 2 montre le système domotique comprenant un produit, selon un deuxième mode de réalisation, ainsi qu'un dispositif mobile selon la présente invention.

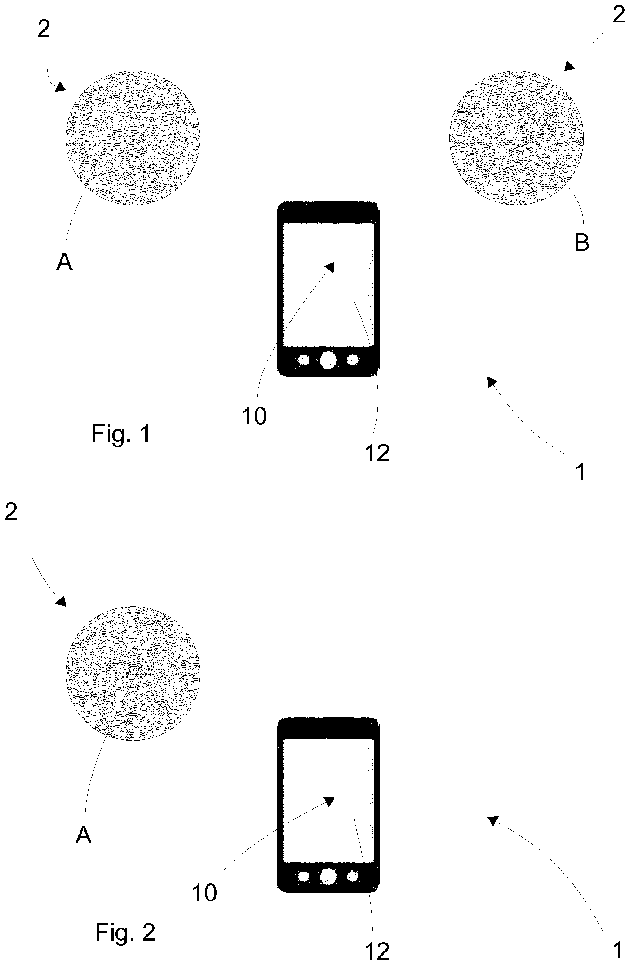

L'invention a donc tout d'abord pour objet un assemblage 1 comprenant un système domotique 2. Le système domotique 2 décrit par la figure 1 comprend deux produits A, B. L'assemblage domotique 1 comprend également un dispositif mobile 10 apte à effectuer une configuration et/ou un paramétrage des produits A, B et à appairer un premier produit A avec un deuxième produit B. Le dispositif mobile 10 comprend un lecteur de puce à champ de communication proche qui peut être, par exemple, un lecteur de puce NFC ou un lecteur de puce RFID. Le dispositif mobile 10 comprend un microcontrôleur et une mémoire.

Les produits A, B comprennent chacun une puce à champ de communication proche et une mémoire. La puce à champ de communication proche peut être, par exemple, une puce NFC ou une puce.

La puce des produits A, B et le lecteur du dispositif mobile 10 sont aptes à établir entre le lecteur et chaque puce un lien de communication bidirectionnel à champ de communication proche. Le dispositif mobile 10 est apte à retirer de la mémoire de chaque produit A, B une information contenue dans la mémoire du produit A, B concerné à travers le lien de communication bidirectionnel correspondant. Le dispositif mobile 10 est apte à charger dans sa mémoire l'information retirée associée au produit A, B concerné.

En outre, le dispositif mobile 10 est apte à créer une nouvelle information et à stocker la nouvelle information dans la mémoire du dispositif mobile 10. Le dispositif mobile 10 est également apte à transmettre à la puce à champ de communication proche du produit A, B concerné la nouvelle information associée au produit A, B concerné à travers le lien de communication bidirectionnel à champ de communication proche correspondant. Le dispositif mobile 10 est apte à stocker dans la mémoire du produit A, B concerné la nouvelle information associée au produit A, B concerné.

L'assemblage domotique 1 permet de configurer et/ou paramétrer et/ou appairer les produits A, B du système domotique 2 à l'aide d'un procédé de transfert d'information bidirectionnel qui est également proposé selon l'invention.

Le procédé propose d'approcher le dispositif mobile 10 de la puce du produit A, B pour établir un lien de communication bidirectionnel à champ de communication proche entre le lecteur du dispositif mobile 10 et la puce correspondante du produit A, B.

Dans le cas où le procédé de transfert d'information bidirectionnel est mis en oeuvre pour réaliser une configuration ou un paramétrage du système domotique 2, comme par exemple le système domotique 2 représenté sur la figure 2, le procédé propose de transmettre une nouvelle information, créée à l'aide du microcontrôleur, depuis le dispositif mobile 10 vers la puce. Cette nouvelle information peut être, par exemple, une nouvelle information téléchargée depuis une base de données à travers internet ou être fournie à l'aide d'un support informatique associé au produit A, B. La nouvelle information peut être créée sur la base d'une information transmise de la puce vers le lecteur et stockée dans la mémoire du dispositif mobile 10 à travers le lien de communication bidirectionnel à champ de communication proche.

Le dispositif mobile 10 peut comprendre, par exemple, un moyen d'affichage et d'entrée 12, comme un écran tactile 12.

Par exemple, le paramétrage d'un produit A, B peut être effectué en modifiant l'information transmise stockée dans la mémoire du dispositif mobile 10 à l'aide de l'écran tactile 12 en stockant la nouvelle information ainsi obtenue dans la mémoire du dispositif mobile 10. Le dispositif mobile 10 est ensuite approché de la puce à champ de communication proche du produit A, B et la nouvelle information est transmise au produit A, B à travers le lien de communication bidirectionnel à champ de communication proche. Ensuite, la nouvelle information est stockée dans la mémoire du produit A, B.

Le procédé peut comprendre une étape qui consiste à transmettre une information, stockée dans la mémoire du produit, depuis la puce de ce dernier vers le lecteur, puis à transmettre depuis le lecteur vers la puce, à travers le lien de communication bidirectionnel à champ de communication proche, une nouvelle information, créée à partir du dispositif mobile 10 en fonction ou sur la base de la ou d'au moins l'une des informations transmises par le ou les produits A, B, puis à stocker la nouvelle information dans la mémoire du produit A, B concerné.

Selon une caractéristique additionnelle, le procédé peut être mis en oeuvre pour effectuer un appairage du premier produit avec le deuxième produit. Le procédé comprend alors l'étape qui consiste à approcher le dispositif mobile 10 de la puce du premier produit A et à approcher le dispositif mobile 10 de la puce du deuxième produit B. Lorsque le dispositif mobile est approché du premier produit A, le procédé consiste à établir un premier lien de communication bidirectionnel à champ de communication proche entre le lecteur et la puce du premier produit A, et lorsque le dispositif mobile 10 est approché du deuxième produit B, à établir un deuxième lien de communication bidirectionnel à champ de communication proche entre le lecteur et la puce du deuxième produit B.

En outre, le procédé peut comprendre les étapes consistant à transmettre depuis la puce du premier produit A jusque dans le lecteur l'information, dite première information, associée au premier produit A, à travers le premier lien de communication bidirectionnel à champ de communication proche puis à transmettre depuis la puce du deuxième produit B jusque dans le lecteur l'information, dite deuxième information, associée au deuxième produit B à travers le deuxième lien de communication bidirectionnel à champ de communication proche.

Le procédé peut comprendre une étape qui consiste à sauvegarder la première information et la deuxième information dans la mémoire du dispositif mobile 10.

Par ailleurs, le procédé peut comprendre les étapes consistant à transmettre, à partir du dispositif mobile 10 à la puce du premier produit A une nouvelle information, dite première nouvelle information, à travers le premier lien de communication bidirectionnel puis à transmettre à partir du dispositif mobile 10, à la puce du deuxième produit une nouvelle information, dite deuxième nouvelle information, à travers le deuxième lien de communication bidirectionnel, ladite première nouvelle information étant créée en fonction ou sur la base de la première et/ou de la deuxième information, la deuxième nouvelle information étant créée en fonction ou sur la base de la deuxième et/ou la première information. Le procédé peut comprendre alors les étapes qui consistent à stocker dans la mémoire du premier produit la première nouvelle information et à stocker dans la mémoire du deuxième produit la deuxième nouvelle information.

Pour appairer, par exemple, un produit d'entrée A comme un détecteur de mouvement, avec un produit de sortie B, comme par exemple un actionneur d'éclairage, l'utilisateur doit approcher le dispositif mobile 10 de la puce du deuxième produit B pour transmettre l'information stockée dans la mémoire du produit B depuis la puce vers le lecteur.

De préférence, l'information transmise comprend un identifiant du deuxième produit B. Le dispositif mobile 10 est approché de la puce du deuxième produit B pour transmettre une information stockée dans la mémoire du deuxième produit B depuis la puce vers le lecteur. Le dispositif mobile 10 est ensuite approché de la puce du premier produit A pour transmettre une information stockée dans la mémoire du premier produit A depuis la puce vers le lecteur. Ensuite, une nouvelle information est créée sur la base de l'information récupérée de la mémoire du premier produit A en y ajoutant au moins l'identifiant du deuxième produit B. La nouvelle information comprenant l'identifiant du deuxième produit B, est ensuite transmise à la puce du premier produit A pour la stocker dans la mémoire du premier produit A. La nouvelle information stockée dans la mémoire du premier produit A, qui dans cet exemple est un produit d'entrée du type détecteur de mouvement, comprend alors un identifiant permettant d'identifier le deuxième produit B, qui dans cet exemple est un produit de sortie du type actionneur d'éclairage. Le détecteur de mouvement est alors apte d'envoyer une commande à travers le réseau domotique vers l'actionneur d'éclairage pour activer celui-ci.

Le lien de communication bidirectionnel à champ de communication proche entre le lecteur et la puce correspondante au produit A, B permet une communication bidirectionnelle entre le dispositif mobile 10 et le produit A, B, c'est à dire dans les deux sens. La puce passive ou semi-passive du produit A, B permet l'établissement d'un lien de communication bidirectionnel à champ de communication proche sans que le produit doive être approvisionné extérieurement en électricité.

L'énergie nécessaire au niveau de la puce pour établir ce lien est alors fournie par le lecteur même au moment où le lecteur est approché de la puce. Pour les produits A, B il est également envisageable de prévoir une puce à champ de communication proche active. Pour assurer alors le fonctionnement de la puce lorsque le produit A, B n'est pas approvisionné extérieurement en électricité, il est possible de prévoir une source d'énergie approvisionnant la puce dans le produit A, B, comme par exemple un accumulateur électrique.

Bien entendu, l'invention n'est pas limitée aux modes de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de transfert d'information bidirectionnel pour réaliser une configuration et/ou un paramétrage et/ou un appairage d'un système domotique (2) à partir d'un dispositif mobile (10), ledit système domotique (2) comprenant au moins deux produits (A, B), ledit dispositif mobile (10) comprenant un microcontrôleur et une mémoire ; ledit dispositif mobile (10) étant apte à effectuer une configuration et/ou un paramétrage d'au moins lesdits deux produits (A, B) et étant apte à appairer au moins un des au moins deux produits (A, B) avec au moins un autre des au moins deux produits (A, B) et comprenant un lecteur de puce à champ de communication proche tel qu'un lecteur de puce NFC et une mémoire, chacun des produits (A, B) comprenant une puce à champ de communication proche telle qu'une puce NFC et une mémoire contenant au moins une information,
procédé **caractérisé en ce qu'**il comprend, pour chaque produit (A, B) concerné, à configurer et/ou paramétrer et/ou appairer, et à partir d'un tel lecteur capable de communiquer de façon bidirectionnelle chaque puce, les étapes successives suivantes :
a) approcher le dispositif mobile (10) d'au moins deux puces; et,
b) chaque puce approchée, établir un lien de communication bidirectionnelle à champ de communication proche entre le lecteur et la puce correspondante pour pouvoir, au choix, réaliser les étapes suivantes :
i) soit transmettre une nouvelle information, créée à l'aide du microcontrôleur, depuis le dispositif mobile (10) vers la puce,
ii) soit transmettre une information, stockée dans la mémoire du produit (A, B), depuis la puce de ce dernier vers le lecteur, puis transmettre depuis le lecteur vers la puce, à travers le lien de communication bidirectionnelle à champ de communication proche, une nouvelle information, créée à partir du dispositif mobile (10) en fonction ou sur la base de d'au moins l'une des information(s) transmise(s) par les produits (A, B), puis à stocker la nouvelle information dans la mémoire du produit (A, B) concerné.

2. Procédé selon la revendication 1, **caractérisé en ce qu'**il comprend, à partir du système domotique (2) comprenant au moins deux produits, à savoir un premier produit (A) et un deuxième produit (B) et à partir du dispositif mobile (10) apte à effectuer un appairage du premier produit (A) avec le deuxième produit (B) :
- dans l'étape a) approcher le dispositif mobile (10) de la puce du premier produit (A) et approcher le dispositif mobile (10) de la puce du deuxième produit (B),
- dans l'étape b) lorsque le dispositif mobile (10) est approché du premier produit (A),
établir un premier lien de communication bidirectionnelle à champ de communication proche entre le lecteur et la puce du premier produit (A), et lorsque le dispositif mobile (10) est approché du deuxième produit (B),
établir un deuxième lien de communication bidirectionnelle à champ de communication proche entre le lecteur et la puce du deuxième produit (B),
- dans l'étape b)ii)
transmettre depuis la puce du premier (A) produit jusque dans le lecteur l'information, dite première information, associée au premier produit (A), à travers le premier lien de communication bidirectionnelle à champ de communication proche et à transmettre depuis la puce du deuxième produit (B) jusque dans le lecteur l'information, dite deuxième information, associée au deuxième produit (B) à travers le deuxième lien de communication bidirectionnelle à champ de communication proche,
transmettre, à partir du dispositif mobile (10), à la puce du premier produit (A) une nouvelle information, dite première nouvelle information, à travers le premier lien de communication bidirectionnelle et transmettre, à partir du dispositif mobile (10), à la puce du deuxième produit (B) une nouvelle information, dite deuxième nouvelle information, à travers le deuxième lien de communication bidirectionnelle, ladite première nouvelle information étant créée en fonction ou sur la base de la première et/ou de la deuxième information(s), ladite deuxième nouvelle information étant créée en fonction ou sur la base de la deuxième et/ou de la première information(s),
stocker dans la mémoire du premier produit (A) la première nouvelle information et stocker dans la mémoire du deuxième produit (B) la deuxième nouvelle information.

3. Procédé selon l'une quelconque des revendications 1 à 2, **caractérisé en ce que**, dans l'étape b)ii) la ou chaque nouvelle information est créée sur la base de la ou d'au moins l'une des informations transmises en modifiant la ou les informations transmises à l'aide du dispositif mobile (10).

4. Procédé selon l'une quelconque des revendications 1 à 3, **caractérisé en ce que** l'information du produit (A, B) concerné comprend au moins un identifiant du produit (A, B) concerné permettant l'identification du produit (A, B) concerné.

5. Procédé selon les revendications 2 et 4 prises en combinaison l'une avec l'autre, **caractérisé en ce que**, dans l'étape b)ii), pour le premier produit (A) la première nouvelle information comprend l'identifiant du deuxième produit (B) pour réaliser l'appairage du premier produit (A) avec le deuxième produit (B), et/ou pour le deuxième produit (B) la deuxième nouvelle information comprend l'identifiant du premier produit (A) pour réaliser l'appairage du deuxième produit (B) avec le premier produit (A).

6. Procédé selon l'une quelconque des revendications 1 à 5, **caractérisé en ce que** l'information transmise depuis le produit concerné comprend au moins un paramètre de réglage réglant le fonctionnement du produit (A, B) concerné et **en ce que** la nouvelle information comprend un nouveau paramètre de réglage réglant le fonctionnement du produit (A, B) concerné, ledit nouveau paramètre de réglage étant modifié à la demande d'un utilisateur se servant du dispositif mobile (10).

7. Procédé selon l'une quelconque des revendications 1 à 6, **caractérisé en ce qu'**il consiste dans l'étape a) à approcher le dispositif mobile (10) de la puce correspondante et à mettre en tension la puce du produit (A, B) concerné à l'aide du lecteur de puce.

8. Procédé selon l'une quelconque des revendications 1 à 7, **caractérisé en ce qu'**il comprend, à partir du dispositif mobile (10) comprenant au moins un microcontrôleur, ledit dispositif mobile (10) étant de préférence un téléphone mobile du type smartphone ou une tablette informatique, les étapes suivantes :
- lancer un logiciel sur le microcontrôleur ;
- piloter à l'aide du logiciel le lecteur de puce pour établir le ou au moins l'un des lien(s) de communication bidirectionnelle,
- piloter à l'aide du logiciel le lecteur de puce pour retirer de la mémoire du produit (A, B) concerné l'information associée au produit (A, B) concerné à travers le ou au moins l'un des lien(s) de communication bidirectionnelle,
- commander, à l'aide du logiciel, le microcontrôleur pour charger l'information associée au produit (A, B) concerné dans la mémoire du dispositif mobile (10),
- commander le microcontrôleur pour modifier la ou les information(s) transmises dans le lecteur à l'aide du logiciel et pour stocker la ou les information(s) modifiée(s) du produit (A, B) concerné en tant que nouvelle(s) information(s) à associer au produit(s) (A, B) concerné(s) dans la mémoire du dispositif mobile (10),
- piloter le lecteur pour envoyer à la puce du produit (A, B) concerné la nouvelle information du produit (A, B) concerné à travers le lien de communication bidirectionnelle, et
- piloter le lecteur pour stocker dans la mémoire du produit (A, B) concerné la nouvelle information du produit (A, B) concerné.

9. Assemblage domotique apte pour la mise en oeuvre du procédé selon l'une quelconque des revendications 1 à 8, comprenant au moins deux produits (A, B) et un dispositif mobile (10), chacun des produits (A, B) comprenant une puce à champ de communication proche et une mémoire contenant au moins une information, ledit dispositif mobile (10) étant apte à effectuer une configuration et/ou un paramétrage d'au moins lesdits deux produits (A, B) et étant apte à appairer au moins un des au moins deux produits (A, B) avec au moins un autre des au moins deux produits (A, B) et comprenant un lecteur de puce à champ de communication proche tel qu'un lecteur de puce NFC, un microcontrôleur et une mémoire, **caractérisé en ce que**,
la puce de chaque produit (A, B) et ledit lecteur sont aptes à établir entre le lecteur et chaque puce un lien de communication bidirectionnelle à champ de communication proche,
ledit dispositif mobile (10) étant apte à retirer de la mémoire du produit (A, B) concerné l'information contenue dans sa mémoire à travers le lien de communication bidirectionnelle correspondante,
ledit dispositif mobile (10) étant apte à charger dans sa mémoire l'information retirée associée au produit (A, B) concerné,
ledit dispositif mobile (10) étant apte à créer la nouvelle information telle que définie dans l'étape b)i) et/ou l'étape b)ii) dudit procédé et à stocker la nouvelle information dans la mémoire du dispositif mobile (10),
ledit dispositif mobile (10) étant apte à transmettre à la puce à champ de communication proche du produit (A, B) concerné la nouvelle information associée au produit (A, B) concerné à travers le lien de communication bidirectionnelle à champ de communication proche correspondante, et
ledit dispositif mobile (10) étant apte à stocker dans la mémoire du produit (A, B) concerné la nouvelle information associée au produit (A, B) concerné.

10. Assemblage domotique selon la revendication 9, **caractérisé en ce qu'**il comprend au moins deux produits (A, B), à savoir un premier produit (A) et un deuxième produit (B),
le premier produit (A) comprenant une première puce à champ de communication proche et une mémoire, ladite première puce étant apte à établir avec le lecteur un premier lien de communication bidirectionnelle telle que définie dans la revendication 2,
le deuxième produit (B) comprenant une deuxième puce à champ de communication proche et une mémoire, ladite deuxième puce étant apte à établir avec le lecteur un deuxième lien de communication bidirectionnelle telle que définie dans la revendication 2
le premier produit (A) et le deuxième produit (B) étant de préférence appairés à l'aide d'une mise en oeuvre du procédé selon la revendication 2.

11. Assemblage domotique selon la revendication 10, **caractérisé en ce que** le premier produit (A) est un produit d'entrée et le deuxième produit est un produit de sortie (B)

12. Assemblage domotique selon l'une quelconque des revendications 9 à 11, **caractérisé en ce que** la ou chaque puce à champ de communication proche est une puce passive ou semi-active, qui est apte de communiquer avec le lecteur sans être alimentée électriquement de l'extérieur.

## Patentansprüche

1. Verfahren zum bidirektionalen Informationstransfer zur Durchführung einer Konfiguration und/oder einer Parametrierung und/oder einer Paarbildung eines Heimsystems (2) von einer mobilen Vorrichtung (10) aus, wobei das Heimsystem (2) mindestens zwei Produkte (A, B) umfasst, wobei die mobile Vorrichtung (10) eine Mikrosteuereinheit und einen Speicher umfasst; wobei die mobile Vorrichtung (10) geeignet ist, eine Konfiguration und/oder eine Parametrierung mindestens der beiden Produkte (A, B) zu bewirken, und geeignet ist, ein Paar mindestens eines der mindestens zwei Produkte (A, B) mit mindestens einem anderen der mindestens zwei Produkte (A, B) zu bilden, und umfassend einen Nahkommunikationsfeld-Chip, wie einen NFC-Chip, und einen Speicher, wobei jedes der Produkte (A, B) einen Nahkommunikationsfeld-Chipleser, wie einen NFC-Chipleser, und einen Speicher umfasst, der mindestens eine Information enthält,
wobei das Verfahren **dadurch gekennzeichnet ist, dass** es, für jedes betreffende Produkt (A, B), das zu konfigurieren und/oder zu parametrieren und/oder zu paaren ist, und von einen solchen Leser aus, der bidirektional mit jedem Chip kommunizieren kann, die folgenden Schritte umfasst:
a) Annähern der mobilen Vorrichtung (10) an mindestens zwei Chips; und
b) für jeden angenäherten Chip, Herstellen einer bidirektionalen Nahkommunikationsfeld-Kommunikationsverbindung zwischen dem Leser und dem entsprechenden Chip, um nach Wahl die folgenden Schritte durchführen zu können:
i) entweder Übertragen einer neuen Information, die mit Hilfe der Mikrosteuereinheit erzeugt wird, von der mobilen Vorrichtung (10) an den Chip,
ii) oder Übertragen einer Information, die in dem Speicher des Produkts (A, B) gespeichert ist, von dem Chip dieses Letzteren an den Leser, dann Übertragen von dem Leser an den Chip, über die bidirektionale Nahkommunikationsfeld-Kommunikationsverbindung, einer neuen Information, die von der mobilen Vorrichtung (10) als Funktion oder auf der Basis mindestens einer der von den Produkten (A, B) übertragenen Information(en), dann Speichern der neue Information in dem Speicher des betreffenden Produkts (A, B).

2. Verfahren nach Anspruch 1, **dadurch gekennzeichnet, dass** dieses umfasst, von dem Heimsystem (2) aus, umfassend mindestens zwei Produkte, nämlich ein erstes Produkt (A) und ein zweites Produkt (B), und von der mobilen Vorrichtung (10) aus, die geeignet ist, eine Paarbildung des ersten Produkts (A) mit dem zweiten Produkt (B) zu bewirken:
- in Schritt a) Annähern der mobilen Vorrichtung (10) an den Chip des ersten Produkts (A) und Annähern der mobilen Vorrichtung (10) an den Chip des zweiten Produkts (B),
- in Schritt b), wenn die mobile Vorrichtung (10) an das erste Produkt (A) angenähert wird,
Herstellen einer ersten bidirektionalen Nahkommunikationsfeld-Kommunikationsverbindung zwischen dem Leser und dem Chip des ersten Produkts (A), und, wenn die mobile Vorrichtung (10) an das zweite Produkt (B) angenähert wird,
Herstellen einer zweiten bidirektionalen Nahkommunikationsfeld-Kommunikationsverbindung zwischen dem Leser und dem Chip des zweiten Produkts (B),
- in Schritt b)ii)
Übertragen, von dem Chip des ersten Produkts (A) an den Informationsleser, einer als erste bezeichneten Information, die mit dem ersten Produkt (A) assoziiert ist, über die erste bidirektionale Nahkommunikationsfeld-Kommunikationsverbindung, und Übertragen, von dem Chip des zweiten Produkts (B) an den Informationsleser, einer als zweite bezeichneten Information, die mit dem zweiten Produkt (B) assoziiert ist, über die zweite bidirektionale Nahkommunikationsfeld-Kommunikationsverbindung,
Übertragen, von der mobilen Vorrichtung (10) an den Chip des ersten Produkts (A), einer neuen Information, die als erste neue Information bezeichnet wird, über die erste bidirektionale Nahkommunikationsfeld-Kommunikationsverbindung, und Übertragen, von der mobilen Vorrichtung (10) an den Chip des zweiten Produkts (B), einer neuen Information, die als zweite neue Information bezeichnet wird, über die zweite bidirektionale Nahkommunikationsfeld-Kommunikationsverbindung, wobei die erste neue Information als Funktion oder auf der Basis der ersten und/oder der zweiten Information(en) erzeugt wird, wobei die zweite neue Information als Funktion oder auf der Basis der zweiten und/oder der ersten Information(en) erzeugt wird,
Speichern, in dem Speicher des ersten Produkts (A), der ersten neuen Information, und Speichern, in dem Speicher des zweiten Produkts (B), der zweiten neuen Information.

3. Verfahren nach einem der Ansprüche 1 bis 2, **dadurch gekennzeichnet, dass**, in Schritt b)ii) das oder jede neue Information auf der Basis der oder mindestens einer der übertragenen Informationen durch Modifikation der Information(en) erzeugt wird, die mit Hilfe der mobilen Vorrichtung (10) übertragen wird (werden).

4. Verfahren nach einem der Ansprüche 1 bis 3, **dadurch gekennzeichnet, dass** die Information des betreffenden Produkts (A, B) mindestens einen Identifikator des betreffenden Produkts (A, B) umfasst, der die Identifikation des betreffenden Produkts (A, B) gestattet.

5. Verfahren nach den Ansprüchen 2 und 4, in Kombination miteinander, **dadurch gekennzeichnet, dass**, in Schritt b)ii), für das erste Produkt (A) die erste neue Information den Identifikator des zweiten Produkts (B) umfasst, um die Paarbildung des ersten Produkts (A) mit dem zweiten Produkt (B) durchzuführen, und/oder für das zweite Produkt (B) die zweite neue Information den Identifikator des ersten Produkts (A) umfasst, um die Paarbildung des zweiten Produkts (B) mit dem ersten Produkt (A) durchzuführen.

6. Verfahren nach einem der Ansprüche 1 bis 5, **dadurch gekennzeichnet, dass** die Information, die von dem betreffenden Produkt übertragen wird, mindestens einen Regelungsparameter umfasst, der den Betrieb des betreffenden Produkts (A, B) regelt, und dadurch, dass die neue Information einen neuen Regelungsparameter umfasst, der den Betrieb des betreffenden Produkts (A, B) regelt, wobei der neue Regelungsparameter auf Anforderung eines Bedieners modifiziert wird, der die mobile Vorrichtung (10) bedient.

7. Verfahren nach einem der Ansprüche 1 bis 6, **dadurch gekennzeichnet, dass** dieses daraus besteht, in Schritt a) die mobile Vorrichtung (10) an den entsprechenden Chip anzunähern und den Chip des betreffenden Produkts (A, B) mit Hilfe des Chiplesers unter Spannung zu setzen.

8. Verfahren nach einem der Ansprüche 1 bis 7, **dadurch gekennzeichnet, dass** dieses, von der mobilen Vorrichtung (10) aus, umfassend mindestens eine Mikrosteuereinheit, wobei die mobile Vorrichtung (10) vorzugsweise ein Mobiltelefon vom Smartphone-Typ oder ein Informations-Tablet ist, die folgenden Schritte umfasst:
- Starten einer Software auf der Mikrosteuereinheit;
- Steuern, mit Hilfe der Software, des Chiplesers, um die oder mindestens eine der bidirektionale(n) Kommunikationsverbindung(en) herzustellen,
- Steuern, mit Hilfe der Software, des Chiplesers, um die Information, die mit dem betreffenden Produkt (A, B) assoziiert ist, aus dem Speicher des betreffenden Produkts (A, B) über die oder mindestens eine der bidirektionale(n) Kommunikationsverbindung(en) zu entnehmen,
- Steuern, mit Hilfe der Software, der Mikrosteuereinheit, um die Information, die mit dem betreffenden Produkt (A, B) assoziiert ist, in den Speicher der mobilen Vorrichtung (10) zu laden,
- Steuern der Mikrosteuereinheit, um die übertragene(n) Information(en) in dem Leser mit Hilfe der Software zu modifizieren, und um die modifizierte(n) Information(en) des betreffenden Produkts (A, B) als neue Information(en), die mit dem (den) betreffenden Produkt(en) (A, B) zu assoziieren ist (sind), in dem Speicher der mobilen Vorrichtung (10) zu speichern,
- Steuern des Lesers, um an den Chip des betreffenden Produkts (A, B) die neue Information des betreffenden Produkts (A, B) über die bidirektionale Kommunikationsverbindung zu senden, und
- Steuer des Lesers, um die neue Information des betreffenden Produkts (A, B) in dem Speicher des betreffenden Produkts (A, B) zu speichern.

9. Heimanordnung, welche geeignet ist, das Verfahren nach einem der Ansprüche 1 bis 8 durchzuführen, umfassend mindestens zwei Produkte (A, B) und eine mobile Vorrichtung (10), wobei jedes der Produkte (A, B) einen Nahkommunikationsfeld-Chip und einen Speicher umfasst, der mindestens eine Information enthält, wobei die mobile Vorrichtung (10) geeignet ist, eine Auslegung und/oder eine Parametrierung mindestens der beiden Produkte (A, B) zu bewirken, und geeignet ist, ein Paar mindestens eines der mindestens zwei Produkte (A, B) mit mindestens einem anderen der mindestens zwei Produkte (A, B) zu bilden, und umfassend einen Nahkommunikationsfeld-Chipleser, wie einen NFC-Chipleser, eine Mikrosteuereinheit und einen Speicher, **dadurch gekennzeichnet, dass**
der Chip jedes Produkts (A, B) und der Leser geeignet sind, zwischen dem Leser und jedem Chip eine bidirektionale Nahkommunikationsfeld-Kommunikationsverbindung herzustellen,
wobei die mobile Vorrichtung (10) geeignet ist, aus dem Speicher des betreffenden Produkts (A, B) die Information, die in seinem Speicher enthalten ist, über die entsprechende Nahkommunikationsfeld-Kommunikationsverbindung zu entnehmen,
wobei die mobile Vorrichtung (10) geeignet ist, in ihren Speicher die entnommene Information, die mit dem betreffenden Produkt (A, B) assoziiert ist, zu laden, wobei die mobile Vorrichtung (10) geeignet ist, die neue Information, wie in Schritt b)i) oder Schritt b)ii) des Verfahrens definiert, zu erzeugen und die neue Information in dem Speicher der mobilen Vorrichtung (10) zu speichern,
wobei die mobile Vorrichtung (10) geeignet ist, an den Nahkommunikationsfeld-Chip des betreffenden Produkts (A, B) die neue Information, die mit dem betreffenden Produkt (A, B) assoziiert ist, über die entsprechende bidirektionale Nahkommunikationsfeld-Kommunikationsverbindung zu übertragen, und
wobei die mobile Vorrichtung (10) geeignet ist, in dem Speicher des betreffenden Produkts (A, B) die neue Information, die mit dem betreffenden Produkt (A, B) assoziiert ist, zu speichern.

10. Heimanordnung nach Anspruch 9, **dadurch gekennzeichnet, dass** diese mindestens zwei Produkte (A, B) umfasst, nämlich ein erstes Produkt (A) und ein zweites Produkt (B),
wobei das erste Produkt (A) einen ersten Nahkommunikationsfeld-Chip und einen Speicher umfasst,
wobei der erste Chip geeignet ist, mit dem Leser eine erste bidirektionale Kommunikationsverbindung herzustellen, wie in Anspruch 2 definiert,
wobei das zweite Produkt (B) einen zweiten Nahkommunikationsfeld-Chip und einen Speicher umfasst,
wobei der zweite Chip geeignet ist, mit dem Leser eine zweite bidirektionale Kommunikationsverbindung herzustellen, wie in Anspruch 2 definiert,
wobei das erste Produkt (A) und das zweite Produkt (B) vorzugsweise mit Hilfe der Durchführung des Verfahrens nach Anspruch 2 gepaart werden.

11. Heimanordnung nach Anspruch 10, **dadurch gekennzeichnet, dass** das erste Produkt (A) ein Eingangsprodukt ist, und das zweite Produkt (B) ein Ausgangsprodukt ist.

12. Heimanordnung nach einem der Ansprüche 9 bis 11, **dadurch gekennzeichnet, dass** der oder jeder Nahkommunikationsfeld-Chip ein passiver oder semiaktiver Chip ist, der geeignet ist, mit dem Leser zu kommunizieren, ohne von außen elektrisch versorgt zu werden.

## Claims

1. Method for bidirectional transfer of information to carry out a configuration and/or a parameterization and/or a pairing of a home automation system (2) from a mobile device (10), said home automation system (2) comprising at least two products (A, B), said mobile device (10) comprising a microcontroller and a memory; said mobile device (10) being able to perform a configuration and/or a parameterization of at least said two products (A, B) and being able to pair at least one of the at least two products (A, B) with at least one other of the at least two products (A, B) and comprising a nearfield communication chip reader such as an NFC chip reader and a memory, each of the products (A, B) comprising a nearfield communication chip such as an NFC chip and a memory containing at least one item of information,
method **characterized in that** it comprises, for each product (A, B) concerned, to be configured and/or parameterized and/or paired, and from one such reader capable of communicating bidirectionally with each chip, the following successive steps:
a) offering up the mobile device (10) to at least two chips; and,
b) each chip offered up, establishing a bidirectional nearfield communication link between the reader and the corresponding chip to be able, by choice, to carry out the following steps:
i) either transmitting a new item of information, created using the microcontroller, from the mobile device (10) to the chip,
ii) or transmitting an item of information, stored in the memory of the product (A, B), from the chip thereof to the reader, then transmitting, from the reader to the chip, via the bidirectional nearfield communication link, a new item of information, created from the mobile device (10) as a function or on the basis of at least one of the items of information transmitted by the products (A, B), then in storing the new item of information in the memory of the product (A, B) concerned.

2. Method according to Claim 1, **characterized in that** it comprises, from the home automation system (2) comprising at least two products, namely a first product (A) and a second product (B) and from the mobile device (10) able to perform a pairing of the first product (A) with the second product (B):
- in the step a), offering up the mobile device (10) to the chip of the first product (A) and offering up the mobile device (10) to the chip of the second product (B),
- in the step b), when the mobile device (10) is offered up to the first product (A),
establishing a first bidirectional nearfield communication link between the reader and the chip of the first product (A), and when the mobile device (10) is offered up to the second product (B),
establishing a second bidirectional nearfield communication link between the reader and the chip of the second product (B),
- in the step b)ii)
transmitting, from the chip of the first product (A) into the reader, the item of information, called first item of information, associated with the first product (A), via the first bidirectional nearfield communication link and in transmitting, from the chip of the second product (B) into the reader, the item of information, called second item of information, associated with the second product (B) via the second bidirectional nearfield communication link,
transmitting, from the mobile device (10), to the chip of the first product (A), a new item of information, called first new item of information, via the first bidirectional communication link and transmitting, from the mobile device (10), to the chip of the second product (B), a new item of information, called second new item of information, via the second bidirectional communication link, said first new item of information being created as a function or on the basis of the first and/or the second item(s) of information, said second new item of information being created as a function or on the basis of the second and/or the first item(s) of information,
storing, in the memory of the first product (A), the first new item of information and storing, in the memory of the second product (B), the second new item of information.

3. Method according to either one of Claims 1 and 2, **characterized in that**, in the step b)ii), the or each new item of information is created on the basis of the or at least one of the items of information transmitted by modifying the item or items of information transmitted using the mobile device (10).

4. Method according to any one of Claims 1 to 3, **characterized in that** the item of information of the product (A, B) concerned comprises at least one identifier of the product (A, B) concerned allowing the identification of the product (A, B) concerned.

5. Method according to Claims 2 and 4 taken in combination with one another, **characterized in that**, in the step b)ii), for the first product (A), the first new item of information comprises the identifier of the second product (B) to carry out the pairing of the first product (A) with the second product (B), and/or for the second product (B), the second new item of information comprises the identifier of the first product (A) to carry out the pairing of the second product (B) with the first product (A).

6. Method according to any one of Claims 1 to 5, **characterized in that** the item of information transmitted from the product concerned comprises at least one setting parameter setting the operation of the product (A, B) concerned and **in that** the new item of information comprises a new setting parameter setting the operation of the product (A, B) concerned, said new setting parameter being modified at the request of a user using the mobile device (10).

7. Method according to any one of Claims 1 to 6, **characterized in that** it consists, in the step a), in offering up the mobile device (10) to the corresponding chip and in powering up the chip of the product (A, B) concerned using the chip reader.

8. Method according to any one of Claims 1 to 7, **characterized in that** it comprises, from the mobile device (10) comprising at least one microcontroller, said mobile device (10) being preferably a mobile telephone of smartphone type or a computer tablet, the following steps:
- launching software on the microcontroller;
- using the software to drive the chip reader to establish the or at least one of the bidirectional communication link(s),
- using the software to drive the chip reader to fetch from the memory of the product (A, B) concerned the item of information associated with the product (A, B) concerned via the or at least one of the bidirectional communication link(s),
- commanding, using the software, the microcontroller to load the information associated with the product (A, B) concerned into the memory of the mobile device (10),
- commanding the microcontroller to modify the item or items of information transmitted in the reader using the software and to store the modified item or items of information of the product (A, B) concerned as new item(s) of information to be associated with the product(s) (A, B) concerned in the memory of the mobile device (10),
- driving the reader to send to the chip of the product (A, B) concerned, the new item of information of the product (A, B) concerned via the bidirectional communication link, and
- driving the reader to store, in the memory of the product (A, B) concerned, the new item of information of the product (A, B) concerned.

9. Home automation assembly suitable for implementing the method according to any one of Claims 1 to 8, comprising at least two products (A, B) and a mobile device (10), each of the products (A, B) comprising a nearfield communication chip and a memory containing at least one item of information, said mobile device (10) being able to perform a configuration and/or a parameterization of at least said two products (A, B) and being able to pair at least one of the at least two products (A, B) with at least one other of the at least two products (A, B) and comprising a nearfield communication chip reader such as an NFC chip reader, a microcontroller and a memory, **characterized in that**,
the chip of each product (A, B) and said reader are able to establish, between the reader and each chip, a bidirectional nearfield communication link,
said mobile device (10) being able to fetch, from the memory of the product (A, B) concerned, the information contained in its memory via the corresponding bidirectional communication link,
said mobile device (10) being able to load, into its memory, the fetched item of information associated with the product (A, B) concerned,
said mobile device (10) being able to create the new item of information as defined in the step b)i) and/or the step b)ii) of said method and to store the new item of information in the memory of the mobile device (10),
said mobile device (10) being able to transmit, to the nearfield communication chip of the product (A, B) concerned, the new item of information associated with the product (A, B) concerned via the corresponding bidirectional nearfield communication link, and
said mobile device (10) being able to store, in the memory of the product (A, B) concerned, the new item of information associated with the product (A, B) concerned.

10. Home automation assembly according to Claim 9, **characterized in that** it comprises at least two products (A, B), namely a first product (A) and a second product (B),
the first product (A) comprising a first nearfield communication chip and a memory, said first chip being able to establish, with the reader, a first bidirectional communication link as defined in Claim 2,
the second product (B) comprising a second nearfield communication chip and a memory, said second chip being able to establish, with the reader, a second bidirectional communication link as defined in Claim 2,
the first product (A) and the second product (B) being preferably paired using an implementation of the method according to Claim 2.

11. Home automation assembly according to Claim 10, **characterized in that** the first product (A) is an entry product and the second product is an exit product (B).

12. Home automation assembly according to any one of Claims 9 to 11, **characterized in that** the or each nearfield communication chip is a passive or semi-active chip, which is able to communicate with the reader without being externally electrically powered.
